# EUROPEAN PATENT SPECIFICATION

(11) **EP 1 845 768 B1**
(45) Date of publication and mention of the grant of the patent: **23.11.2011**
(21) Application number: 06700843.3
(22) Date of filing: 09.01.2006
(51) Int. Cl.: A01C 1/00

(54) **A DEVICE FOR DETERMINING THE UNIFORMITY OF A BATCH OF SEEDS**
GERÄT ZUR BESTIMMUNG DER GLEICHFÖRMIGKEIT EINER SAATGUTCHARGE
APPAREIL À DÉTERMINER L'UNIFORMITÉ D'UN LOT DE SEMENCES

(30) Priority: 10.01.2005 EP 05000328
(43) Date of publication of application: 24.10.2007
(73) Proprietor: Syngenta Participations AG, 4058 Basel (CH)
(72) Inventor: RINGENBACH, Alex, 4542 Luterbach (CH); LEUENBERGER, Jacob A., 4058 Basel (CH)
(74) Representative: Arunasalam, Velautha-Cumaran
(86) International application number: PCT/EP2006/000099
(87) International publication number: WO 2006/072590

(56) References cited:
- EP-A- 0 360 657
- EP-A- 0 801 886
- EP-A- 1 078 563
- DE-A1- 19 845 883
- DE-C1- 3 811 035
- US-B1- 6 535 632
- LIN T T ET AL: "Gray-scale and color machine vision systems for seedling detection" PROCEEDINGS OF 5TH INTERNATIONAL CONFERENCE ON COMPUTERS IN AGRICULTURE, 1994, pages 105-110, XP009048810 STJOSEPH, MI, USA

## Description

The present invention relates to a method and device of determining the uniformity of the colour, size and shape characteristics of a batch of plant seeds.

Seeds are often treated with pesticides (in the form of formulations) to provide protection against pests (such as, fungi and insects). The sizing, colour distribution and shape of a treated plant seed may have an influence on its quality. The assessment of how well the treatment works is often done visually or by chemical analysis.

Chemical analysis is a destructive method (involving manual sample preparation, extraction of the chemicals from the treated seed), and could take one to several days, often in a laboratory off-site.

Visual analysis can suffer from subjective interpretation, which typically leads to inconsistencies.

Prior art describes methods and devices that disclose that colour, size and shape can be detected for a seed, but such methods and devices involve the use of spectrometers, which tend be costly. A method and device for determining the colours uniformity of a batch of seeds are known from EP-A-O 801 886.

A method and device are now available, which overcome the difficulties of visual analysis. Indeed, the method and apparatus allow comparison between different treatment methods, different pesticide formulation types, and different equipment parameter settings in the treatment process, such as degree of dilution and capacity with continuous flow seed treatment machines, setting of parameters for the application of seed treatment products in batch treaters, speed of rotation of turning bottom, degree of atomisation, seed quality per batch, timing for product application and mixing.

A particular advantage of the present invention is that it could be carried out at the treatment plant without spectrometry, and the results obtained quickly, rather than sending samples for analysis off-site. Further, the analysis is on a single seed basis, which is not destroyed after the analysis. Moreover, the analytical tool once set-up can be a portable tool and provides automatic analysis with low operator skills needed to operate it.

Accordingly, in a first aspect, the present invention provide a method of determining the uniformity of the colour, size and shape characteristics of a batch of seeds, which comprises:
(a) placing each seed (1) in a defined area (2), where the defined area has a colour of distinct wavelength to the colour of the seed;
(b) bringing each defined area to a position where a digital image in colour can be taken of the defined area;
(c) illuminating with visible light the defined area during the taking of the digital image;
(d) taking a digital image of the defined area with a camera (5);
(e) processing the images taken into Hue, and optionally Saturation, of the HSI (Hue Saturation and Intensity) colour model to identify the objects within the defined area, preferably discrete objects, in each defined area by segmentation;
(f) determining for each object the size, shape, and colour based on the Hue, and optionally Saturation, of the HSI colour model by feature extraction;
(g) determining whether each object satisfies the seed size range or seed size colour range or seed shape range;
(h) determining for each object satisfying the requirements in (g) the actual size, shape, colour distribution and colour based on the Hue, and optionally Saturation; and
(i) reporting the colour, colour distribution, actual size, and shape for the batch to provide an indication of the uniformity of the batch.

In a second aspect, the present invention provides an apparatus for determining the uniformity of the colour, size and shape characteristics of a batch of seeds, which comprises:
(i) a means (3) for bringing a coloured defined area to a position where a digital image is taken,
(ii) a visible light source (4) for illuminating the defined area,
(iii) a camera (5) for taking digital images in colour (4), and
(iv) a processor (6) operable to convey the images taken into Hue, and optionally Saturation, of the HSI (Hue Saturation and Intensity) colour model to identify the objects within the defined area, preferably discrete objects, in each defined area by segmentation; to determine for each object the size, shape, and colour, preferably based on the Hue, and optionally Saturation, of the HSI colour model by feature extraction; to determine whether each object satisfies the seed size range or seed size colour range or seed shape range; to determine for each conformed object the actual size, shape, colour distribution and colour, preferably based on the Hue, and optionally Saturation; and to report the colour, colour distribution, actual size, and shape for the batch to provide an indication of the uniformity of the batch.

### Description of the Figures:

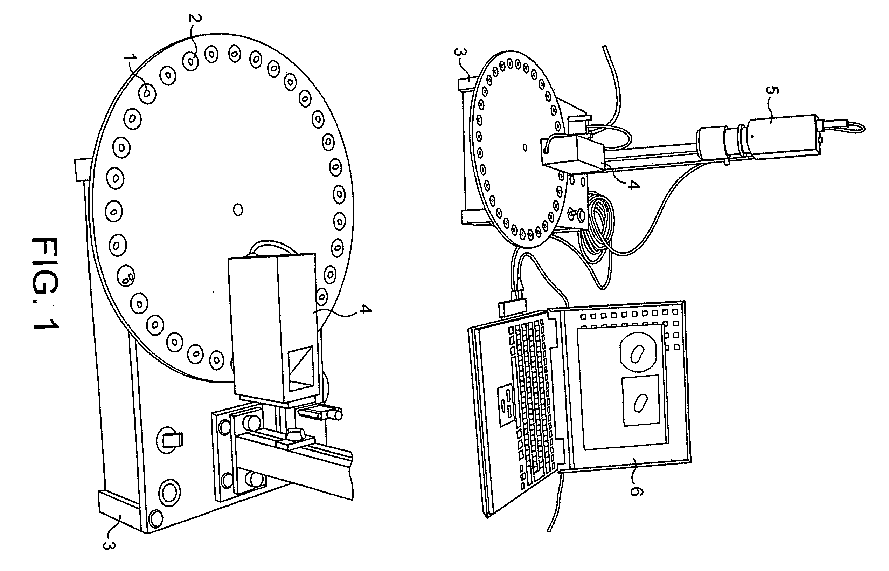

Figure 1: A representation of an apparatus according to present invention.
Figure 2: A flow chart of the image analysis and computing steps of an embodiment of the present invention.
Figure 3: A representation of a visible light source.
Figure 4: A schematic representation of an image analysis according to present invention to detect the defined area (Auto detection).
Figure 5: An image of a seed captured by the camera for processing.
Figure 6: A report of the uniformity of a batch of seeds for colour (A), size (B) and shape (C).
Figure 7: A colour (based on Hue) comparison report of different treatments on wheat seeds

The invention is described in detail below.

Formulations contain, as well as the pesticides (e.g., insecticides and fungicides), surfactants, thickeners, anti-freeze and dyes. The use of the dyes (or colourants) results in the treated seeds being coloured. The colour of the treated seed and its uniformity can, therefore, be an indication of how good the treatment is. Further, the amount of colourant adhered to the seed is an indicator of the amount of pesticide adherence to the seed (pesticide-loading), and so the present invention can act as an indicator of that as well.

Further, certain seed treatments involve shaping the seed with materials, such as fillers, to ensure a standard shape and size of each seed, the present invention is also suitable for determining the uniformity and effectiveness of such treatments.

Any seed can be utilized in the present invention. In a preferred embodiment, the seed is selected from the group consisting of alfalfa seed, apple seed, banana seed, barley seed, bean seed, broccoli seed, castorbean seed, citrus seed, clover seed, coconut seed, coffee seed, maize seed, cotton seed, cucumber seed, Douglas fir seed, Eucalyptus seed, Loblolly pine seed, linseed seed, melon seed, oat seed, olive seed, palm seed, pea seed, peanut seed, pepper seed, poplar seed, Radiata pine seed, rapeseed seed, rice seed, rye seed, sorghum seed, Southern pine seed, soybean seed, strawberry seed, sugarbeet seed, sugarcane seed, sunflower seed, sweetgum seed, tea seed, tobacco seed, tomato seed, triticale seed, turf, wheat seed, and Arabidopsis thaliana seed.

In a more preferred embodiment, the seed is selected from the group consisting of cotton seed, maize seed, soybean seed, rapeseed seed, rice seed, barley seed, rye seed, oat seed, triticale seed, and wheat seed.

In an even more preferred embodiment, the seed is a maize seed or wheat.

A skilled person would understand that certain calibration steps, such as photometric and geometric calibrations, should be completed before carrying out the present invention to ensure that comparisons can be made between different measurements, in particular because the invention is based on colour metric analysis. In particular, the photometric calibration requires white balancing and setting the intensity range to be about 80% of the maximum of the sensitivity of the sensor to ensure normalise colour measurements. Further, the distance between pixels should be correlated to the actual distance in millimetres so that, for example, the size measurement reported is absolute.

Also, the camera should be configured so that no processing of the image is carried out by the camera in order that the image analysis by the processor is carried out on the actual data captured (or grabbed) by the camera.

The present invention is carried out at wavelengths of electromagnetic radiation that the human eye can see (visible light), i.e. 380 to 780, preferably 400 to 700, nm.

It is important that the colour of seeds and the colour of the defined area appear in distinct segments of the HSI colour model so that the image analysis by the processor can identify the seed.

An advantage of processing the image of a seed using the HSI colour model is that better segmentation is achieved. For example, use of red-coloured seeds on a green-coloured defined area has been found to be effective with the HSI model.

A defined area is an area where the coloured seeds are placed and provide a suitable background for the image analysis to identify the seed. The size of the defined area should be such that the seed is within it.

A batch of seeds can be defined by a number which is sufficient to indicate whether the uniformity analysis is representative or not of the treatment. Generally, at least 30 seeds are required, in which case the operator would input this number into the processor at the start of the invention so that the processor knows that once 30 seeds are detected, no further analysis is required.

The means for bringing the seeds to a position where the images are taken can by any suitable means for moving either the camera relative to the seeds in the defined area that are stationary, or moving the seeds in the defined area to the camera that is stationary. The movement can be operated manually or automatically. In any event, it is important that the seeds are not disrupted during the movement. In a preferred embodiment, the camera is stationary and the seeds are brought to it.

The taking of the digital image can be manually operated whenever the seed is within the scope of the camera, or automatated, for example, triggered by an electronic sensor or by using image analysis.

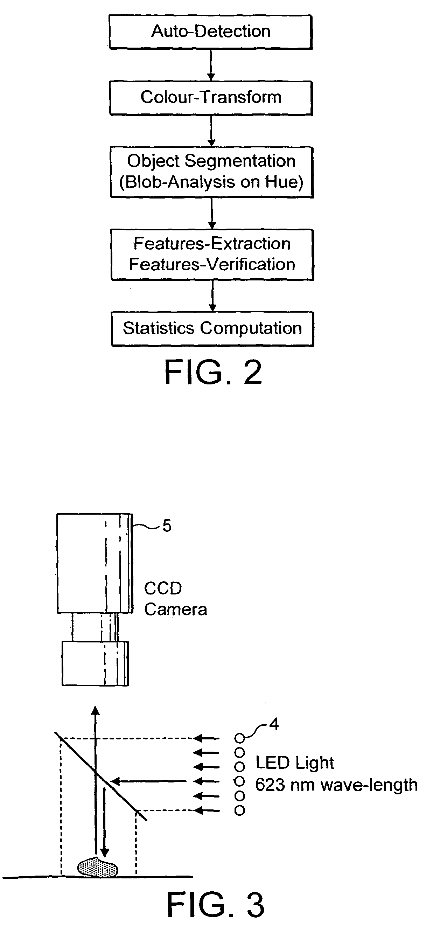

The light source is preferably on permanently, and should be of such intensity and direction such that camera captures a planar image of the seed. Further, the light source should be arranged so that the light from the source does not enter the camera directly, but only after reflectance (see Figure 3) from the seed (emitted light). For the avoidance of any doubt, the camera does not receive any transmitted light, i.e., directly from the light source.

Any light source that can provide the broad range of illumination covering the wavelengths between 380 and 780, preferably 400 to 700, nm can be used. Examples are light emitting diodes and thermal light sources. Such light sources are readily available, for example from Volpi AG, Wiesenstrasse 33, 8952 Schlieren, Switzerland, and RVSI/NER, 15 Twin Bridge RoadWeare, NH, 03281, USA. The light source is preferably positioned from the defined area such that the defined area has a continuous illumination and the influence of any environmental light is eliminated.

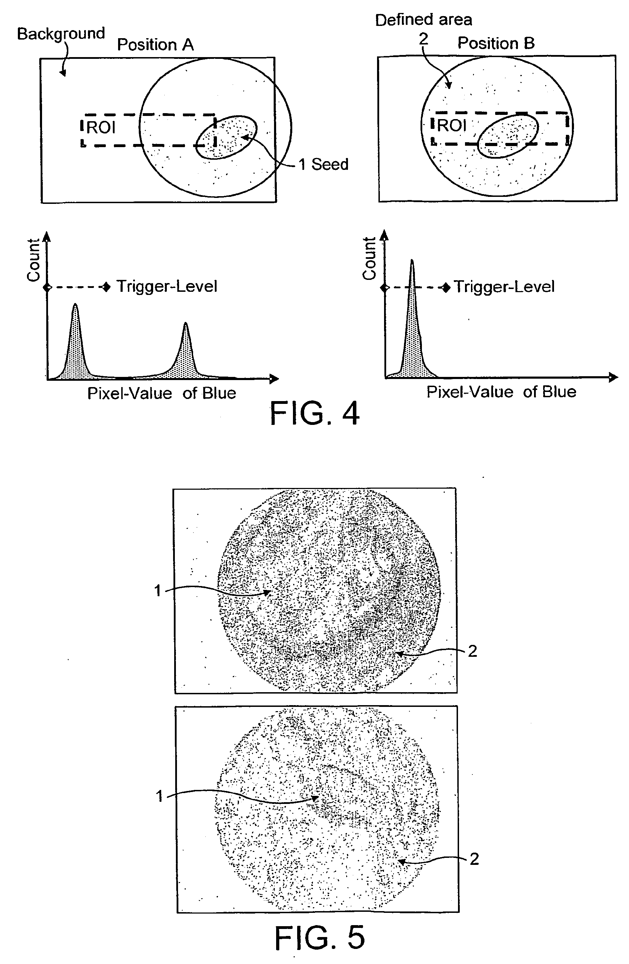

Examples of a suitable camera are one-dimensional or two-dimensional colour CCD camera with 1-CCD sensor. Also usable are 3-CCD sensor camera or a B/W CCD camera with three colour (red, green & blue) filters. Such CCD cameras are readily available, for example from Sony-, Jai-, Basler- Cameras form local Distributors of Image-Processing Products. Figure 5 shows a representation of an image from a two-dimensional CCD camera.

In an embodiment, a telecentric optic is used to obtain a better sharpness of the seed.

The processor used in the present invention to carry out the image analysis can be any suitable processor device, such as a computer, which is connectable to camera, for example, by Fire-Wire or with PCI Bus. Another processor can also be used to present the results, but preferably the same processor carries out the image analysis and reporting.

Within the present invention, the emitted light from the seed is not dispersed.

In the instance the taking of the images is automated using image analysis, a preferred embodiment of the present invention, the CCD camera operates by taking or grabbing an image every 1/30 of a second, sending the data of the image to the processor where analysis of the image is carried out to determine whether the image contains the entire defined area. This part of the invention is known as the auto detection (see Figure 4). If the analysed image is not the defined area or only of part of the defined area, then the image is excluded from further image analysis. The auto detection is generally carried out using the RGB colour model, based on the operator identifying the colour of the defined area and colour of the seed being analysed before starting the invention, and then a region of interest (ROI) (based on number of pixels corresponding to the size of the defined area) is analysed by the processor to check whether the colour parameters for the defined area & seed are satisfied. Generally, the colour of the defined area is contrasted with a background of the means for bringing each defined area to a position for an image to be taken, for example, a suitable colour would be white background with a green defined area.

Once the taken image contains the entire defined area, either carried out manually or automatically, the RGB model of the image is transformed to Hue, and optionally Saturation, of the HSI colour model (Colour Transform step). Algorithms for such transformations are known (see, for example, Background teachings of such analysis can be found in Fundamentals of Digital Image Processing by Anil K Jain, Prentice Hall, 1989; Basic Binary Image Processing by Alan C Bovik and Mita D Desai, in A. Bovik and J. Gibson; Handbook of Image & Video Proceeding; Academic Press, San Diego 2000; M. Sonka, V. Hlavac and R. Boyle; Image Processing, Analysis and Machine Vision; International Thomson Publishing, Pacific Grave CA 1998; R.C. Gonzales and R.E. Woods; Digital Image Processing; Addison Wesley 1993; and B. Jähne; Digitale Bildverarbeitung; Springer Verlag, Berlin Heidelberg 1997. Further, libraries are available from companies, such as Matrox Electronics Systems Ltd, 1055 boul. St-Régis, Dorval Québec, Canada H9P 2T4, and Cognex Corporation, One Vision Drive, Natick MA 01760-2059, USA, for carrying out such transformations.

Thereafter, the image is segmented using the Hue layer (involving thresholding and BLOB analysis). The threshold values for thresholding depends on the colour of the defined area. Then the binary image is processed by BLOB analysis. The BLOB analysis is preferably carried out using the 4-neighbourhood topology. A skilled person would understand which algorithms to use for such analysis.

The object(s) identified as part of the BLOB analysis that are not the seed are excluded, for example, if objects do not satisfy the size range or shape range for the seed, e.g., on the pixel distance between two widest points within the object, or the area of the object; and if objects touch the boundary of defined area.

The processor identifies a seed, during the BLOB analysis, based on the operator indicating the range of seed sizes and/or seed shapes for the batch. If the object identified in the image is greater or less than the indicated seed ranges, then the object is not considered a seed for feature extraction. Alternatively, the object is feature extracted and then the verification of the whether the object is a seed or not can be done at this step.

Thereafter, the object(s) remaining are considered to be seed(s).

In the event present invention identifies more than one object (seed) satisfying the seed size or shape characteristics per defined area, these are deemed as the corresponding number seeds in the final reporting. It is however, preferable, if one seed is placed per defined area.

Further, if more than one seeds are present in the same defined area and they are touching each other, these can be excluded by BLOB analysis; or separated and included within the batch by specific algorithms, such BLOB separation algorithms, for example, Watershed.

In a preferred embodiment to ensure that the seed is identified and differentiated from the defined area (or background), the seed should be placed within the defined area and not be in contact with the boundary of the defined area, such that discrete objects can be identified in step (e).

Once the object(s) are identified in the image, the size and shape of the object(s) (seed(s)) can be determinable by the analysis. The size can be determined, for example, based on the area of the object, or the greatest distance between two points within the object, transposed into actual square millimetres, or actual millimetres respectively (based on the original geometric calibration); and the shape rating can be determined (for example, based on the ratio of the radius of a circle circumventing the greatest distance between two points within the seed area to the radius of a circle circumventing the shortest distance between two points within the seed area).

The colour and colour distribution of the object (seed) is determined, for example, by computing mean and standard deviation values on the Hue, and optionally Saturation, layer. In an embodiment to have better colour measurements, typically one to five pixels from the object boundary are excluded: this would depend on the resolution level. With higher statistical moments, such as skewness (3. order), kurtosis (4. order), further colour distribution may also be obtained.

In the event the colour of the seed is red, the mean and colour distribution is computed after shifting of the individual Hue value for each pixel to avoid the modulo property of the Hue space.

The number of defined areas is entered into the processor at the start of the invention, so that the processor indicates to the operator once the image analysis is carried out on the corresponding number, so that the image analysis is not replicated on the same defined area (or seed). If further seeds are to be analysed, the operator changes the seeds in the defined areas and continues the measurements.

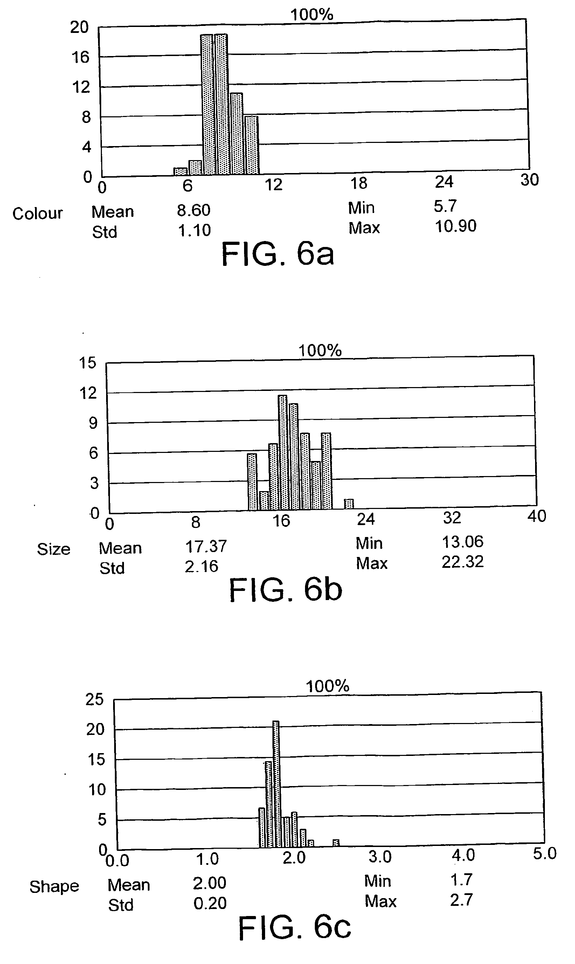

Once the desired number of seeds or defined areas is captured and analysed, the processor stops the image acquisition and computes the statistics, for example, the mean, the standard deviation, minimum and maximum value, of the colour, colour distribution, size and shape of the batch of seeds. It can be represented in the form of a 1-dimensional histogram (see Figure 6) or 2-dimensional graph (colour and colour distribution). Similarly, each seed's characteristics is also available.

The histogram provides an immediate indicator of the uniformity of the batch - the narrower the plot the more uniform the treatment.

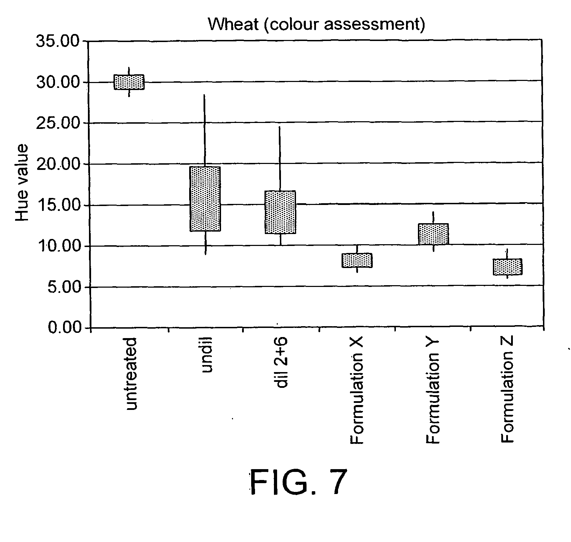

An advantage of the present invention is that a qualitative comparison between one batch of seeds with another is possible. For example, Figure 7 shows the colour rating for different wheat treatments and different formulation types.

The data may be also presented in any form, which would allow a skilled person to appreciate the uniformity of the batch of seeds.

The present invention also use the 2-dimensional colour sub-space of the RGB colour model (independent of the Intensity). In this sub-space the centre of gravity and the standard deviation of the colour distribution of the seed are computed as the quantifying colour values.

Other characteristics, such as texture, of a seed may be also determinable by the present invention.

A particular advantage of the present invention is that a operator would select a batch of seeds for image analysis, ensure that the invention is correctly calibrated, enter the seed type (for example, seed size range and/or colour), enter the number of seeds in the batch, start the present invention and leave it; could resume his other duties; and return to study the results shortly after.

## Claims

1. A method of determining the uniformity of the colour, size and shape characteristics of a batch of seeds, which comprises:
(a) placing each seed (1) in a defined area (2), where the defined area has a colour of distinct wavelength to the colour of the seed;
(b) bringing each defined area to a position where a digital image in colour can be taken of the defined area;
(c) illuminating with visible light the defined area during the taking of the digital image;
(d) taking a digital image of the defined area with a camera (5);
(e) processing the images taken into Hue, and optionally Saturation, of the HSI (Hue Saturation and Intensity) colour model to identify the objects within the defined area, preferably discrete objects, in each defined area by segmentation;
(f) determining for each object the size, shape, and colour based on the Hue, and optionally Saturation, of the HSI colour model by feature extraction;
(g) determining whether each object satisfies the seed size range or seed size colour range or seed shape range;
(h) determining for each object satisfying the requirements in (g) the actual size, shape, colour distribution and colour based on the Hue, and optionally Saturation; and
(i) reporting the colour, colour distribution, actual size, and shape for the batch to provide an indication of the uniformity of the batch.

2. The method according to claim 1, wherein the defined area is on a means for moving each seed (3) relative to a camera (5) where the digital image in step (d) is taken.

3. The method according to either claim 1 or claim 2, wherein the camera is a CCD.

4. The method according to any one of claims 1 to 3, wherein the taking of the digital image of the entire defined area is triggered by image analysis.

5. An apparatus for determining the uniformity of the colour, size and shape characteristics of a batch of seeds, which comprises:
(i) a means (3) for bringing a coloured defined area to a position where a digital image is taken,
(ii) a visible light source (4) for illuminating the defined area,
(iii) a camera (5) for taking digital images in colour (4), and
(iv) a processor (6) operable to convey the images taken into Hue, and optionally Saturation, of the HSI (Hue Saturation and Intensity) colour model to identify the objects within the defined area, preferably discrete objects, in each defined area by segmentation; to determine for each object the size, shape, and colour, preferably based on the Hue, and optionally Saturation, of the HSI colour model by feature extraction; to determine whether each object satisfies the seed size range or seed size colour range or seed shape range; to determine for each conformed object the actual size, shape, colour distribution and colour, preferably based on the Hue, and optionally Saturation; and to report the colour, colour distribution, actual size, and shape for the batch to provide an indication of the uniformity of the batch.

6. The apparatus according to claim 5, wherein the camera (5) is stationary.

7. The apparatus according to either claim 5 or claim 6, wherein the camera is a CCD camera.

8. The apparatus according to claims 5 to 7, wherein the processor (6) is further operable to identify the entire defined area.

## Patentansprüche

1. Eine Methode zur Feststellung der Einheitlichkeit der Farbe, Größe und Formcharakteristiken eines Saatbündels, welcher umfasst:
(a) Die Platzierung jeder Saat (1) in einem definierten Bereich (2), wobei der definierte Bereich eine Farbe von einer einzigartigen Wellenlänge entsprechend der Saatfarbe hat;
(b) Die Bringung eines jeden definierten Bereichs in eine Lage, wo eine digitale Abbildung in Farbe des definierten Bereichs aufgenommen werden kann;
(c) Die Beleuchtung mit sichtbarem Licht des definierten Bereichs während der Aufnahme der digitalen Abbildung;
(d) Die Aufnahme einer digitalen Abbildung mittels Kamera (5) des definierten Bereichs;
(e) Die Verarbeitung der aufgenommenen Abbildungen in Buntton und wahlweise Sättigung des HSI (Hue Saturation and Intensity - Buntton-Sättigung und -intensität) Farbmodells, um die Gegenstände, vorzugsweise diskrete Gegenstände, innerhalb des definierten Bereichs in jedem definierten Bereich nach Segmentierung, zu erkennen;
(f) Die Bestimmung für jeden Gegenstand seiner Größe, Form und Farbe auf Grund des Bunttons, und wahlweise der Sättigung des HSI-Farbmodells durch Merkmalextraktion;
(g) Die Bestimmung ob jeder Gegenstand den Saatgrößenausmaß, Saatgrößenfarbenausmaß oder Saatformausmaß erfüllt;
(h) Die Bestimmung für jeden die gemäß (g) Erfordernisse erfüllenden Gegenstand, der tatsächlichen Größe, Form, Farbverteilung und Farbe auf Grund des Bunttons, und wahlweise der Sättigung; und
(i) Die Berichterstattung über die Farbe, Farbverteilung, tatsächliche Größe und Form des Bündels um einen Hinweis über die Einheitlichkeit des Bündels zu geben.

2. Eine Methode gemäß Anspruch 1, wobei der definierte Bereich befindet sich auf einem Mittel zur Bewegung einer jeden Saat (3) im Verhältnis zur Kamera (5), wo eine digitale Abbildung laut Schritt (d) aufgenommen wird.

3. Die Methode gemäß entweder Anspruch 1 oder Anspruch 2, wobei die Kamera eine CCD ist.

4. Die Methode gemäß etwaigem der Ansprüche 1 bis 3, wobei die Aufnahme einer digitalen Abbildung des gesamten definierten Bereichs durch die Abbildungsanalyse ausgelöst wird.

5. Eine Vorrichtung zur Bestimmung der Einheitlichkeit der Farbe, Größe und Formcharakteristiken eines Saatbündels, welcher umfasst:
(i) Ein Mittel (3) zur Bringung eines farblichen definierten Bereichs in eine Lage, wo eine digitale Abbildung aufgenommen wird,
(ii) Eine sichtbare Lichtquelle (4) für die Beleuchtung des definierten Bereichs,
(iii) Eine Kamera (5) für die Aufnahme von digitalen Abbildungen in Farbe (4), und
(iv) Ein dazu betriebsfähiger Prozessor (6), um die aufgenommenen Abbildungen im Buntton und wahlweise Sättigung des HSI (Hue Saturation and Intensity - Buntton-Sättigung und Intensität) Farbmodells darzustellen, um die Gegenstände innerhalb des definierten Bereichs zu erkennen, vorzugsweise diskrete Gegenstände, in jedem definierten Bereich nach Segmentierung; für jeden Gegenstand seine Größe, Form und Farbe vorzugsweise auf Grund des Bunttons zu bestimmen, und wahlweise der Sättigung des HSI-Farbmodells durch Merkmalextraktion; ob jeder Gegenstand den Saatgrößenausmaß, Saatgrößenfarbenausmaß oder Saatformausmaß erfüllt, zu bestimmen; für jeden die Erfordernisse erfüllenden Gegenstand die tatsächliche Größe, Form, Farbverteilung und Farbe auf Grund des Bunttons, und wahlweise der Sättigung, zu bestimmen; und über die Farbe, Farbverteilung, tatsächliche Größe und Form für den Bündel zu berichten, um einen Hinweis über die Einheitlichkeit des Bündels zu geben.

6. Die Vorrichtung gemäß Anspruch 5, worin die Kamera (5) stationär ist.

7. Die Vorrichtung gemäß entweder Anspruch 5 oder Anspruch 6, worin die Kamera eine CCD Kamera ist.

8. Die Vorrichtung gemäß den Ansprüchen 5 bis 7, worin der Prozessor (6) zusätzlich dazu betriebsfähig ist, um den gesamten definierten Bereich zu erkennen.

## Revendications

1. Procédé pour déterminer l'uniformité des caractéristiques de couleur, de taille et de forme d'un lot de semences, comprenant :
(a) le placement de chaque semence (1) dans une zone définie (2), où la zone définie présente une couleur d'une longueur d'onde distincte de la semence ;
(b) le déplacement de chaque zone définie vers une position où une photo numérique en couleur pourra être prise de la zone définie ;
(c) l'éclairage avec une lumière visible de la zone définie pendant la prise de photo numérique ;
(d) la prise d'une photo numérique de la zone définie avec une caméra (5) ;
(e) le traitement des images selon les paramètres Teinte, et éventuellement Saturation d'un modèle chromatique TSI (Teinte, Saturation, Intensité) afin d'identifier par un processus de segmentation les objets de la zone définie, de préférence des objets discrets, dans chaque zone définie ;
(f) la détermination pour chacun des objets leur taille, leur forme et leur couleur par rapport au paramètre Teinte, et éventuellement Saturation, du modèle chromatique TSI à l'aide d'une fonction de reconnaissance des caractéristiques ;
(g) la détermination pour chacun des objets leur conformité par rapport à la plage de taille des semences, la plage de couleur des semences, ou la plage de forme des semences ;
(h) la détermination pour chacun des objets qui satisfait aux exigences susmentionnées à l'étape (g) leur taille réelle, leur forme, leur distribution de couleur ainsi que leur couleur en fonction du paramètre Teinte et éventuellement du paramètre Saturation ; et
(i) la communication de la couleur, de la distribution de la couleur, de la taille réelle et de la forme du lot afin de fournir une indication de l'uniformité de l'ensemble du lot.

2. Procédé selon la revendication 1, **caractérisé en ce que** la zone définie se trouve posée sur des moyens de déplacement de chacune des semences (3) par rapport à la caméra (5), où l'image numérique de l'étape (d) est prise.

3. Procédé selon l'une quelconque des revendications 1 ou 2, **caractérisé en ce que** la caméra est une caméra à dispositif de couplage de charge (CCD).

4. Procédé selon l'une quelconque des revendications 1 à 3, **caractérisé en ce que** la photo numérique de l'ensemble de la zone définie est déclenchée par une analyse de l'image.

5. Appareil pour déterminer l'uniformité des caractéristiques de couleur, de taille et de forme d'un lot de semences, comprenant :
(i) des moyens (3) pour déplacer une zone de couleur définie vers une position où la photo numérique sera prise,
(ii) une source de lumière visible (4) pour éclairer la zone définie,
(iii) une caméra (5) pour prendre des photos numériques en couleur (4), et
(iv) un processeur (6) fonctionnant pour convertir les photos prises en données de Teinte, et éventuellement de Saturation, d'un modèle chromatique TSI (Teinte, Saturation, Intensité) afin d'identifier par un processus de segmentation les objets contenus dans la zone définie, de préférence des objets discrets, dans chaque zone définie ; afin de déterminer pour chacun des objets, sa taille, sa forme et sa couleur, de préférence en fonction du paramètre Teinte, et éventuellement du paramètre Saturation, d'un modèle chromatique TSI à l'aide d'une fonction de reconnaissance des caractéristiques ; afin de déterminer dans quelle mesure l'objet s'inscrit dans la plage des tailles, dans la plage des couleurs, ou dans la plage des formes des semences ; afin de déterminer pour chacune des semences conformes, la taille réelle, la forme, la distribution de la couleur et la couleur, de préférence en fonction du paramètre Teinte et éventuellement du paramètre Saturation ; et de communiquer la couleur, la distribution des couleurs, la taille réelle, et la forme du lot fourni ; permettant ainsi d'offrir une indication de l'uniformité de l'ensemble du lot.

6. Appareil selon la revendication 5, **caractérisé en ce que** la caméra est stationnaire.

7. Appareil selon la revendication 5 ou la revendication 6, **caractérisé en ce que** la caméra est une caméra à dispositif de couplage de charge (CCD).

8. Appareil selon les revendications 5 à 7, **caractérisé en ce que** le processeur (6) fonctionne en outre pour identifier l'ensemble de la zone définie.
